# EUROPÄISCHE PATENTANMELDUNG

(11) **EP 2 810 874 A1**
(43) Veröffentlichungstag der Anmeldung: **10.12.2014**
(21) Anmeldenummer: 14168395.3
(22) Anmeldetag: 15.05.2014
(51) Int. Cl.: B64F 1/34

(54) **Bodenstromaggregat zur Stromversorgung eines Flugzeugs am Boden**

(30) Priorität: 17.05.2013 DE 102013105086
(71) Anmelder: Losch Airport Equipment GmbH, 70629 Stuttgart (DE)
(72) Erfinder: Losch, Marc, 70794 Filderstadt-Sielmingen (DE); Dr. Losch, Max, 72820 Sonnenbühl-Genkingen (DE); Geissler, Matthias, 88605 Rohrdorf (DE)
(74) Vertreter: Jeck, Anton

(57) **Zusammenfassung**

Die Erfindung betrifft ein Bodenstromaggregat (1), das aus einem Motor (2), einem mit diesem gekoppelten DC-Generator (3), einer an den Generatorausgang angeschlossenen Anschlusseinrichtung (5, 6), die aus einem Kabel (5) und einem am Kabelende angeschlossenen, in einer Haltevorrichtung (13) des Aggregats einhängbaren und mit einem Flugzeug (7) verbindbaren Stecker (6) besteht, und einem diese Aggregatelemente aufnehmenden fahrbaren Trägergestell (4) mit einer Deichsel (8), die zum Aggregattransport mit einem Zugfahrzeug (9) verbindbar ist und die ein Gelenk (10) aufweist, mit dem die Deichsel (8) aus einer horizontalen Zugposition in eine Betriebsposition hochklappbar ist, wobei die hochgeklappte Deichsel (8) einen Sensor aktiviert, der die Einschaltung des Stromaggregats freigibt.

Um das Wegfahren des Bodenstromaggregats (1) bei noch bestehender Stromversorgungsverbindung mit dem Flugzeug (7) sicher zu verhindern, ist gemäß der Erfindung im Bereich der Deichsel (8) ein Deichselsperrglied (14) angeordnet, das bei fehlendem Einhängezustand des Steckers (6) in der Haltevorrichtung (13) ein Abklappen der Deichsel (8) in die Zugposition sperrt.

## Beschreibung

Die Erfindung betrifft ein Bodenstromaggregat zur Stromversorgung eines Flugzeugs am Boden nach dem Oberbegriff des Anspruchs 1.

Aus der DE 10 2004 014 497 A1 ist eine Verbindung zwischen einem Zugfahrzeug und einem Anhänger beschrieben, wobei im Anhänger ein Sensor vorgesehen ist, der ein Signal erzeugt. Das Signal wird zum Zugfahrzeug gegeben und signalisiert den Verbindungszustand der Verbindungsleitung zwischen dem Zugfahrzeug und dem Anhänger. Dieses Signal bewirkt eine Wegfahrverhinderung des Zugfahrzeugs abhängig vom Verbindungszustand der Verbindungsleitung zwischen dem Zugfahrzeug und dem Anhänger.

Die DE 10 2008 048 310 A1 zeigt ein Ladesystem, das für ein Fahrzeug vorgesehen ist, bei dem ein Diebstahl des Ladekabels, eine Einführung eines Fremdkörpers in eine fahrzeugseitige Steckdose oder eine Manipulation verhindert sind, wenn eine eingebaute Batterie, die für eine Fahrleistung verwendbar ist, von einer Haushaltsleistung geladen wird. Dafür ist eine Türverriegelungsvorrichtung für eine Tür vorgesehen, die das Ladekabel am Fahrzeug sichert.

Es ist auch eine Verbindungseinrichtung zwischen einem Abgabeanschluss eines Ladegeräts und einem Ladeanschluss eines mit Strom betriebenen Fahrzeugs bekannt, wie die DE 10 2009 045 639 A1 zeigt, die mit einem Wegfahr-Sicherheitsmechanismus versehen ist, der ein Wegfahren bei angeschlossenem Fahrzeug verhindert. Die Verbindungseinrichtung ist mit einem Sensor im Abgabeanschluss versehen, der elektrisch oder mechanisch ermittelt, ob der Abgabeanschluss mit dem Ladeanschluss noch verbunden ist. Das Wegfahren wird nur bei Fehlen der Verbindung zwischen Abgabeanschluss und Ladeanschluss freigegeben.

Die DE 10 2011 082 896 A1 zeigt eine Ladevorrichtung für ein Fahrzeug mit einem Energiespeicher, wobei die Ladevorrichtung eine Ladequelle, einen Ladestecker, eine Ladebuchse, ein Ladesteuergerät, ein Wechselstromladegerät und ein Leistungsschaltmittel umfasst. Die Ladebuchse hat neun belegbare Kontakte. Die neue Belegung der Kontakte ermöglicht ein DC-low-Laden und ein DC-high-Laden und verbessert damit die Ladearchitektur.

Aus der DE 11 2008 001 348 T5 ist eine Flugzeugwartungsgrube bekannt, welche ein Bodenstromaggregat zur Zufuhr von elektrischer Energie zu einem am Boden befindlichen Flugzeug aufnimmt. Diesem Bodenstromaggregat wird über einen Eingang eine Netzspannung zugeführt. Es weist eine stabilisierte Ausgangsspannung auf, welche über ein Ausgangskabel einem in der Nähe geparkten Flugzeug zugeführt wird. Das Bodenstromaggregat ist in einem säulenförmigen Rahmen montiert, welcher vertikal verschoben werden kann, so dass das Bodenstromaggregat angehoben und während des Betriebs außerhalb der Grube über dem Boden positioniert werden kann. Über eine Drahtverbindung kann ein Verriegelungssignal vom Flugzeug an das Bodenstromaggregat zugeführt werden, das über die Spannungsqualität Auskunft gibt. Wenn kein Verriegelungssignal gesendet wird, wird das Bodenstromaggregat abgeschaltet.

Eine Luftstarter- und Frischluftumwälzvorrichtung ist in einem unabhängigen Fahrzeug untergebracht, das mit einem Flugzeug gekoppelt werden kann. Wie die EP 1 655 222 A1 zeigt, kann das unabhängige Fahrzeug mit einer Deichsel zur Ankopplung anderer ähnlicher Fahrzeuge ausgerüstet sein.

Bodenstromaggregate zur Stromversorgung eines Flugzeugs am Boden sind als mobile GPU-Bodenstromaggregate (Ground Power Unit) bekannt. Sie übernehmen in der Vorbereitungsphase die Stromversorgung von Flugzeugen am Boden. Das Bodenstromaggregat besteht gewöhnlich aus einem Motor (Dieselmotor), einem mit diesem gekoppelten DC-Generator, einer an den Generatorausgang angeschlossenen Anschlusseinrichtung und einem fahrbaren Trägergestell, in dem diese Aggregatelemente eingebaut sind. Das Trägergestell besitzt eine Deichsel, die zum Aggregattransport mit einem Zugfahrzeug verbunden werden kann und die ein Gelenk aufweist, mit dem die Deichsel hoch- und abklappbar ist. Die hochgeklappte Deichsel aktiviert einen Sensor, der die Einschaltung des Stromaggregats freigibt. Die Anschlusseinrichtung besteht aus einem Kabel und einem an dessen Ende angeschlossenen Stecker, der an einer im Trägergestell vorgesehen Halteeinrichtung angebracht oder an einem Flugzeug angeschlossen werden kann. Da bei dem bekannten Bodenstromaggregat das Lösen des Steckers vom Flugzeug und das Hochklappen der Deichsel in die Betriebsposition sowie das Abklappen der Deichsel in die Zugposition manuell erfolgen, kann es vorkommen, dass die Ankopplung des Bodenstromaggregats an das Zugfahrzeug durchgeführt und das Bodenstromaggregat abtransportiert wird, ohne dass die Verbindung des Kabels zum Flugzeug gelöst ist, da die Arbeiten dafür manuell und unkontrolliert erfolgen. Dadurch können erhebliche Schäden am Flugzeug und am Bodenstromaggregat entstehen.

Aus diesem Grund ist schon versucht worden, mittels einer Hupe darauf aufmerksam zu machen, dass ein Fall einer nichtgelösten Kabelverbindung zwischen Flugzeug und Bodenstromaggregat vorliegt. Diese Lösung ist aber nicht sicher, da bei dem vorhandenen Fluglärm die Hupe leicht überhört werden kann.

Es ist Aufgabe der Erfindung, ein Bodenstromaggregat nach dem Oberbegriff des Anspruchs 1 so weiterzuentwickeln, dass die manuellen Tätigkeiten beim Abtransport des Bodenstromaggregats durch ein Zugfahrzeug nur durchführbar sind, wenn absolut sichergestellt ist, dass die Kabelverbindung zum Flugzeug gelöst ist.

Die gestellte Aufgabe wird durch die Merkmale des Anspruchs 1 gelöst.

Dies ist bei dem bekannten Bodenstromaggregat, das aus einem Motor, einem mit diesem gekoppelten DC-Generator, einer an den Generatorausgang angeschlossenen Anschlusseinrichtung, die aus einem Kabel und einem am Kabelende angeschlossenen in eine Haltevorrichtung des Bodenstromaggregats einhängbaren oder mit einem Flugzeug verbindbaren Stecker besteht, und einem diese Aggregatelemente aufnehmbaren fahrbaren Trägergestell mit einer Deichsel, die zum Abtransport des Bodenstromaggregats mit einem Zugfahrzeug verbindbar ist, und die ein Gelenk aufweist, mit dem die Deichsel aus einer horizontalen Zugposition in eine Betriebsposition hochklappbar ist, wobei die hochgeklappte Deichsel einen Sensor aktiviert, der die Einschaltung des Bodenstromaggregats freigibt, nach der Erfindung dadurch erreicht, dass im Bereich der Deichsel ein Deichselsperrglied angeordnet ist, das bei fehlendem Einhängezustand des Steckers in der Haltevorrichtung ein Abklappen der Deichsel aus der hochgeklappten Betriebsposition in die horizontale Zugposition sperrt.

Da das Abklappen der Deichsel aus der hochgeklappten Betriebsposition nur möglich ist, wenn der Stecker am Flugzeug abgezogen und in die Haltevorrichtung des Trägergestells eingehängt ist, ist eine absolute Sicherheit gegeben, dass ein Abtransport des Bodenstromaggregats, d. h. der Anschluss an ein Zugfahrzeug, nur dann möglich ist, wenn der Stecker des Kabels in der Haltevorrichtung des Trägergestells eingehängt ist. Dadurch ist ein absolut kontrollierter Ablauf der manuellen Arbeiten erreicht, der eine wesentlich sichere Arbeitsweise darstellt.

Vorteilhafte Ausgestaltungen des Bodenstromaggregats sind den Unteransprüchen zu entnehmen.

So kann vorgesehen sein, dass das Deichselsperrglied aus einem elektromagnetisch betätigten Bolzen besteht, der die Arme der Deichsel in der hochgeklappten Betriebsposition festlegt. Der Bolzen ist durch eine Überwachungseinrichtung steuerbar, die im Bereich der Haltevorrichtung angeordnet und vom eingehängten Stecker betätigbar ist. Dabei hebt der Bolzen die Festlegung der Arme der Deichsel in der Betriebsposition auf und gibt das Abklappen der Deichsel in die Zugposition frei.

Die Überwachungseinrichtung kann dabei auch durch eine Klappe und einen durch diese gesteuerten Schalter gebildet sein. Der Schalter ist durch den in die Haltevorrichtung eingehängten Stecker betätigt und steuert direkt den Bolzen des Deichselsperrglieds elektromagnetisch.

Eine andere Ausgestaltung der Überwachungseinrichtung kann auch durch eine am Stecker angebrachte elektronische Markierung und einen diese Markierung erkennenden und an der Haltevorrichtung angebrachten Sensor gebildet sein. Der Sensor steuert bei eingehängtem Stecker in der Haltevorrichtung den Bolzen des Deichselsperrglieds elektromagnetisch.

Die Erfindung wird anhand von in den beigefügten Zeichnungen dargestellten Ausführungsbeispielen näher erläutert. Es zeigen:
- Fig. 1: eine Prinzipskizze für die Bodenstromversorgung eines Flugzeugs,
- Fig. 2: eine vergrößerte Prinzipdarstellung des Bodenstromaggregats der Fig. 1 mit einem Deichselsperrglied,
- Fig. 3: eine Prinzipdarstellung einer ersten Ausführung einer Überwachungseinrichtung zur Steuerung des Deichselsperrglieds der Fig. 2 und
- Fig. 4: eine Prinzipdarstellung einer zweiten Ausführung einer Überwachungseinrichtung zur Steuerung des Deichselsperrglieds der Fig. 3.

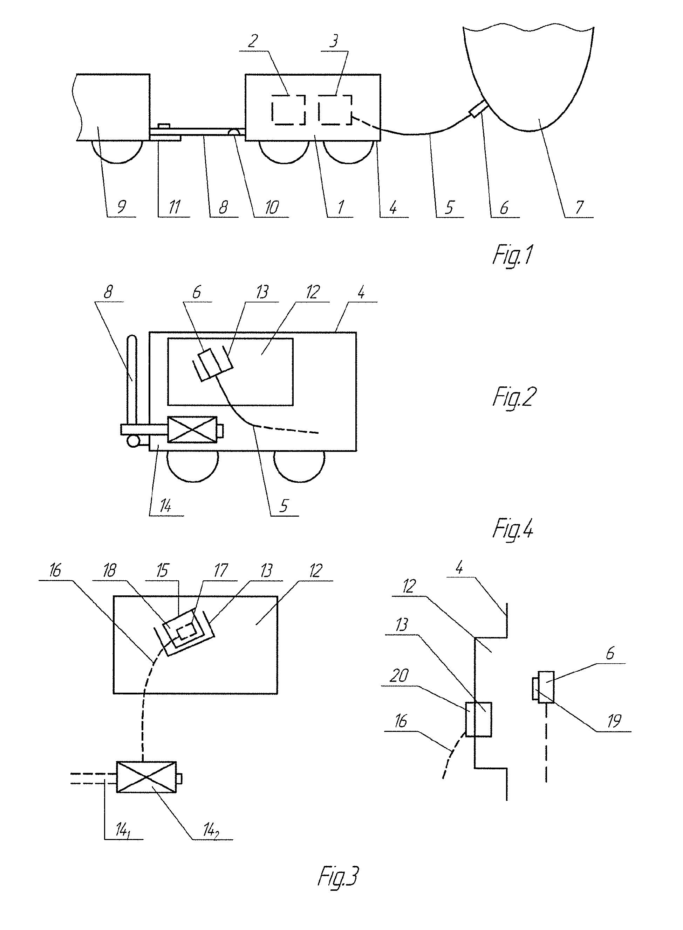

Die Prinzipskizze der Fig. 1 umfasst zur Bodenstromversorgung eines Flugzeugs ein fahrbares Bodenstromaggregat 1, in dem ein Motor 2, beispielsweise Dieselmotor, und ein mit diesem gekoppelter Generator 3 in einem Trägergestell 4 eingebaut sind. Der elektrische Ausgang des Generators 3 ist über eine Anschlusseinrichtung aus einem Kabel 5 und einen am Kabelende angebrachten Stecker 6 mit einem Flugzeug 7 verbunden. Das Bodenstromaggregat 1 besitzt eine lenkbare Deichsel 8, die über eine Kupplung 9 mit einem Zugfahrzeug 10 verbunden ist. Die Deichsel 8 weist ein Gelenk 11 auf, mit dem sie aus einer waagerechten Zugposition in eine hochgeklappte Arbeitsposition bringbar ist. Das Bodenstromaggregat 1 besitzt an seiner Frontseite einen nicht dargestellten Sensor, der den hochgeklappten Zustand der Deichsel 8 erkennt und nur im Erkennungsfall die Inbetriebsetzung des Motors 2 ermöglicht.

Das Trägergestell 4 weist nach Fig. 2 einen Aufnahmeraum 12 auf, in dem eine Haltevorrichtung 13 in Form einer Gabel vorgesehen ist, die zum Halten des Steckers 6 dient, wenn die Stromversorgung des Flugzeugs durch das Bodenstromaggregat 1 nicht mehr nötig ist. Die Fig. 2 zeigt auch ein Deichselsperrglied 14, das nach Fig. 3 aus einem Bolzen 14₁ und einer Magnetwicklung 14₂ besteht, wobei der Bolzen 14₁ durch eine Öffnung in den Armen der Deichsel 8 geführt ist, so dass die Deichsel 8 nicht mehr in Abhängigkeit vom ausgehängten Zustand des Steckers 6 abgeklappt werden kann und das Wegfahren des Bodenstromaggregats 1 somit verhindert ist.

Das Deichselsperrglied 14 ist zu diesem Zweck von einer Überwachungsvorrichtung 15 gesteuert, die nach einer ersten Ausbildung durch einen über eine Steuerverbindung 16 mit dem Deichselsperrglied 14 verbundenen Schalter 17 und einer diesen betätigenden Klappe 18 besteht. Die Klappe 18 ist wiederum beim Einhängen des Steckers 6 in die Haltevorrichtung 13 betätigt, und damit ist der Schalter 17 ausgeschaltet, so dass die Deichsel vom Deichselsperrglied 14 freigegeben ist.

Die Überwachungsvorrichtung 15 kann nach einer in Fig. 4 dargestellten zweiten Ausbildung auch durch eine am Stecker 6 angebrachte elektronische Markierung 19 und einen diese erkennenden elektronischen Sensor 20 gebildet sein, der an die Steuerverbindung 16 angeschlossen ist. Hat der Sensor 20 die Markierung 19 und damit den eingehängten Zustand des Steckers erkannt, ist der Bolzen 14₁ aus der Deichsel 8 herausgezogen und diese damit freigegeben. Diese zweite Ausführung der Überwachungsvorrichtung 15 verhindert Manipulationen, beispielsweise wenn bei der ersten Ausführung ein Holzstück in die Haltevorrichtung 13 gesteckt ist.

## Patentansprüche

1. Bodenstromaggregat (1) zur Stromversorgung eines Flugzeugs am Boden, das aus einem Motor (2), einem mit diesem gekoppelten DC-Generator (3), einer an den Generatorausgang angeschlossenen Anschlusseinrichtung (5, 6), die aus einem Kabel (5) und einem am Kabelende angeschlossenen, in einer Haltevorrichtung (13) des Bodenstromaggregats (1) einhängbaren oder mit einem Flugzeug (7) verbindbaren Stecker (6) besteht, und einem diese Aggregatelemente aufnehmbaren fahrbaren Trägergestell (4) mit einer Deichsel (8), die zum Abtransport des Bodenstromaggregats (1) mit einem Zugfahrzeug (9) verbindbar ist und die ein Gelenk (10) aufweist, mit dem die Deichsel (8) aus einer horizontalen Zugposition in eine Betriebsposition hochklappbar ist, wobei die hochgeklappte Deichsel (8) einen Sensor aktiviert, der die Einschaltung des Bodenstromaggregats (1) freigibt,
**dadurch gekennzeichnet,**
**dass** im Bereich der Deichsel (8) ein Deichselsperrglied (14) angeordnet ist, das bei fehlendem Einhängezustand des Steckers (6) in der Haltevorrichtung (13) ein Abklappen der Deichsel (8) aus der Betriebsposition in die Zugposition sperrt.

2. Bodenstromaggregat nach Anspruch 1,
**dadurch gekennzeichnet,**
**dass** das Deichselsperrglied (14) aus einem elektromagnetisch (14₂) betätigbaren Bolzen (14₁) besteht, der die Arme der Deichsel (8) in der hochgeklappten Betriebsposition festlegt,
**dass** der Bolzen (14₁) durch eine Überwachungseinrichtung (15) steuerbar (16) ist, die im Bereich der Haltervorrichtung (13) angeordnet und vom eingehängten Stecker (6) betätigbar ist und
**dass** der Bolzen (14₁) die Festlegung der Arme der Deichsel (8) in der Betriebsposition aufhebt und das Abklappen der Deichsel (8) in die Zugposition freigibt.

3. Bodenstromaggregat nach Anspruch 2,
**dadurch gekennzeichnet,**
**dass** die Überwachungseinrichtung (15) durch eine Klappe (18) und einen durch diese gesteuerten Schalter (17) gebildet ist, wobei der Schalter (17) durch den in der Haltevorrichtung (13) eingehängten Stecker (6) betätigt ist und direkt den Bolzen (14₁) des Deichselsperrglieds (14) elektromagnetisch (14₂) steuert.

4. Bodenstromaggregat nach Anspruch 2,
**dadurch gekennzeichnet,**
**dass** die Überwachungseinrichtung (15) durch eine am Stecker (6) angebrachte elektronische Markierung (19) und einen diese Markierung (19) erkennenden elektronischen und an der Haltvorrichtung (13) angebrachten Sensor (20) gebildet ist, wobei der Sensor (20) bei eingehängtem Stecker (6) in der Haltevorrichtung (13) den Bolzen (14₁) des Deichselsperrglieds (14) elektromagnetisch steuert.
